# EUROPEAN PATENT SPECIFICATION

(11) **EP 0 477 149 B1**
(45) Date of publication and mention of the grant of the patent: **27.11.1996**
(21) Application number: 91830378.5
(22) Date of filing: 16.09.1991
(51) Int. Cl.: G02B 27/00

(54) **Head-up display device for the display of data aboard automobiles**
Head-up-Anzeige zur Anzeige von Data an Bord eines Autos
Afficheur tête-haute pour affichage de données à bord des automobiles

(30) Priority: 20.09.1990 IT 4829190
(43) Date of publication of application: 25.03.1992
(73) Proprietor: SOCIETA' ITALIANA VETRO- SIV-SpA, 66050 San Salvo (Chieti) (IT)
(72) Inventor: Massarelli, Liberto, I-66054 Vasto CH (IT); Giordano, Vito Lorenzo, I-47041 Bellaria FO (IT)
(74) Representative: Bazzichelli, Alfredo

(56) References cited:
- EP-A- 0 229 876
- EP-A- 0 286 962
- EP-A- 0 377 773
- WO-A-89/03059
- DE-A- 2 633 067
- FR-A- 1 276 968
- FR-A- 2 227 589
- FR-A- 2 391 109
- US-A- 4 740 780

## Description

The present invention regards a head-up display device for the display of data aboard automobiles.

In particular the present invention regards a device of the type above referred to, known in the state of the art as HUD (Head-Up Display), which uses the windshield of an automobile as an optical element for the combination of images and their relay to the observer.

From the state of the art head-up display devices (HUD) are known which are commonly used in the field of military aeronautics in fighter planes, which permit the pilot to observe the in-flight scenario and at the same time to observe instruments, signals, etc., without having to move his eyes from the scene, thus reducing the risks connected with momentary lack of attention to the scenario visible from the front windscreen of the aircraft.

In the field of automobiles, it is equally useful to reduce the causes of distraction for the driver from observation of traffic and the road, due, for example, to keeping an eye on the speedometer, the rev counter, the direction indicator lights (indicators) and the like which are to be found aboard any automobile.

Head-up display devices of an aeronautical type are inconceivable aboard automobiles for a number of reasons, among which cost and size.

In the USA patent 4.740.780 to Braun et al, is illustrated and described a HUD-type display device designed for use aboard automobiles. A similar arrangement is also illustrated and described in the published European patent application No. 0.229.876 in the name of SAZAKI Corporation.

The constructions described in said documents are complex and bulky and, as a consequence of the described conditions of use aboard automobiles, require among other things the use of aspherical optical components which are costly and difficult to produce.

Furthermore, document WO-A-89/03059 to FLIGHT DYNAMICS, INC., USA discloses as follows:

"An optical display system (10) presents visual source information to an observer (18). The display system includes a vision unit (14) that has reflective surfaces (16) through which the observer can view an outside world scene and which reflect source information emanating from an information source (22) for display to the observer. In a preferred embodiment, the optical display system constitutes a head-up display system for an automobile and the observer is the driver of the automobile. The vision unit constitutes an automobile windshield with or without a reflection enhancement material and whose inner and outer surfaces reflect source information carried by light propagating from the information source, such as a liquid crystal display (32). A projection lens system (24) positioned between the inner surface of the wondshield and the information source has optical light-directing properties for compensating for optical aberrations introduced by the nonplanar windshield surface. The projection lens system includes an aspheric element (262) that is unique to a specific aspheric windshield shape and remaining elements that are common to a great number of different windshield shapes. A positioning mechanism (130) allows the driver to adjust the vertical position of the source information (60) reflected by the windshield within a total display field of view for optimal viewing by a seated driver. The positioning mechanism also automatically changes the distance between the display image and the driver as a function of vehicle speed to promote safe vehicle operation."

Furthermore, in document FR-A-1276968 to Compagnie Française Thomson-Houston, France, there are disclosed improvements in observation devices concerning particularly those having a large aperture and comprising an optical system whose mobile element can be shifted by a servo-mechanism receiving Information coming from remote sources, particularly useful for military aircraft for pointing the pilot sight against a target.

In effect, as stated in the two documents mentioned above, which explain the problems involved more clearly, in an automobile are to be found problems greatly differing from those of HUD devices used in military aeronautics, as the optical element combining the HUD image and the surrounding scene is the windshield of the automobile, and it must be remembered that the boundary conditions (stereoscopic binocular vision, accommodation of the eye, and "projection" of the HUD image) are different from those of an automobile of commercial type.

In an automobile, situations of reflection of the sun's light also arise and problems of contrast which do not occur in the military-type aeronautical applications.

Bearing in mind the above, the object of the present invention is that of providing a Head-up display device (HUD) for the display of data aboard commercial automobiles, particularly compact, of simple structure, easily adjustable according to the height of the driver of the automobile, and with improved visibility characteristics for the HUD image both in terms of contrast, and in terms of image quality from an optical point of view, and with good characteristics regarding the so-called "eye box".

According to the present invention, a device of the type mentioned above is provided, according to the attached claim 1.

Again according to the present invention, opposite the exit pupil of the system a contrast element is placed, formed by a semi-transparent net, preferably fastened in a removable manner to allow cleaning of the front surface of the positive lens.

Again according to the present invention, the part of the optical system formed by the visual information source, first refractive element and mirror can be rotated around the optical axis either manually or by a motor, so as to obtain a fine positioning of the image sent towards the eye of the driver, in order to place the virtual image seen by the driver in a convenient position.

Further aspects and characteristics of the present invention will become clearer on consideration of the following description of a preferred embodiment of the present invention, given as a non-limiting illustration, with reference to the figures of the enclosed drawings, in which:
figure 1 shows an outlook of a generic automobile in which the device according to the invention has been installed;
figure 2 shows a partial section view of the optical paths with relation to a driver in driving position;
figure 3 shows a plan view from above of the optical paths of figure 2; and
figure 4 shows a longitudinal section view (transversal with respect to the automobile) of the HUD device according to the present invention.

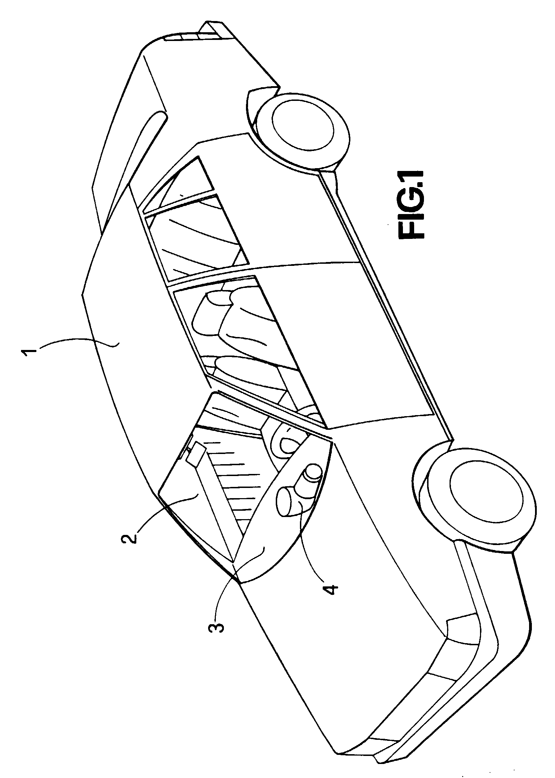

With reference to the drawings, and in particular to figure 1, in a generic automobile 1, provided with a windshield 2, is installed in the dashboard 3 (drawn in outline) the HUD projector device indicated as a whole in 4.

In the following description, it must be noted that the sizes of the various component parts of the HUD device, along with other numeric data, refer to a normal production model of Lancia "THEMA" automobile. Given that the sizes of the various parts of this automobile are known, on the basis of the numeric data which will be given in the following, a person expert in the field will be capable of designing a HUD device of the type which will be described for other makes of automobile also, bearing in mind certain well-known laws of geometrical optics.

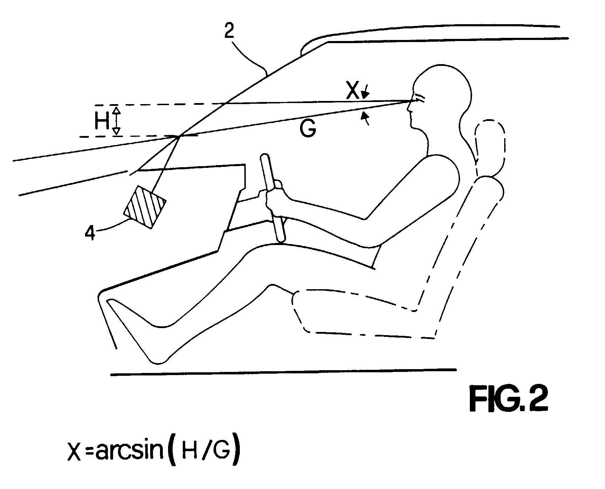

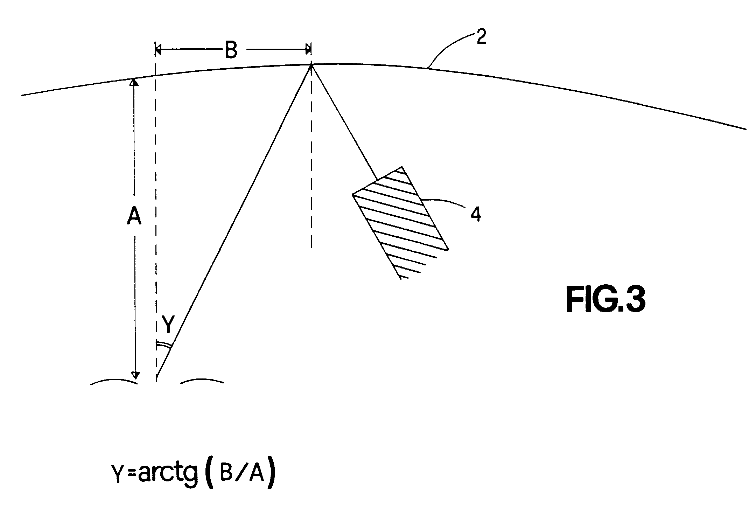

With reference to figure 1, there is shown therein with 1 an automobile (Lancia "THEMA"), provided with a windshield 2 and a dashboard 3, within which the optics of the HUD device 4 according to the present invention are mounted. As will be seen herebelow, the device 4 projects a virtual image towards the windshield 2, which acts as an image combiner (half reflecting mirror), so that the driver can "see" at the same time where he is driving and the visual images generated inside the device 4, regarding running conditions of the vehicle such as speed, engine revolutions, activation of indicators, fuel level, headlights and the like. In figures 2 and 3 are shown the geometrical relations between the eyes of the driver and the windshield 2 of the automobile, which acts as an optical image combiner element, and the virtual image produced by the HUD device 4.

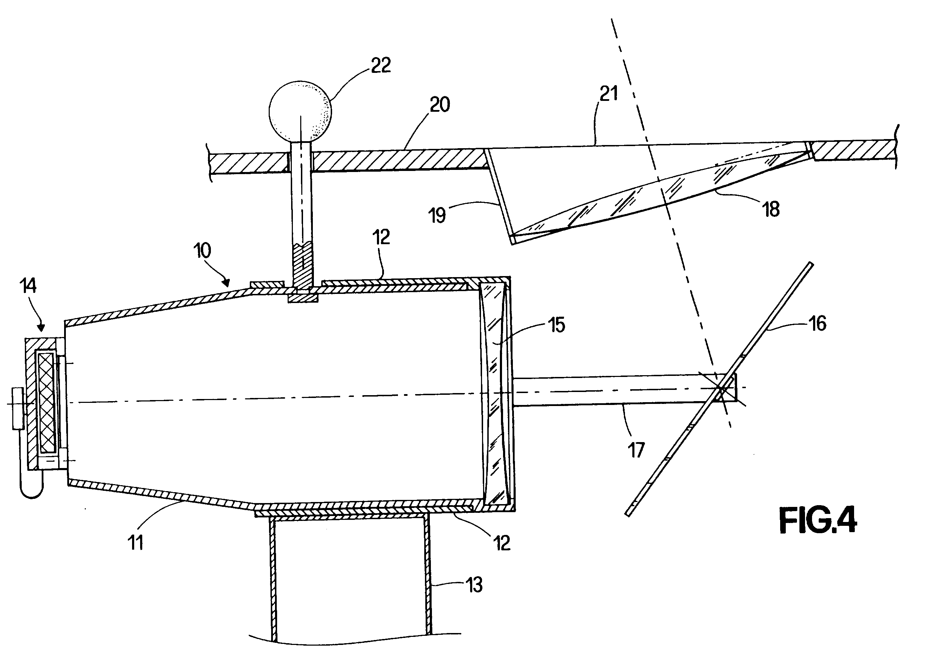

In figure 4 is shown the optical-mechanical structure of the HUD device 4 according to the present invention.

The main part of the device, indicated by 10, comprises a tubular structure 11 rotatably mounted within a tubular element 12 fixed by means of a support 14 to the body of the automobile, so as to render it as integral as possible with the structure of the automobile with the aim of avoiding mechanical resonances which could cause annoying flicker of the image seen by the driver.

On one end of the tubular element 11 is mounted an image forming device 14 indicated generically, as it can be made using a wide variety of techniques, from electronic vacuum fluorescent display units (VFD), to arrays of LEDs, or transparent illuminated masks, or using transmission illuminated liquid-crystal displays.

At the other end of the tubular element 11, is mounted a first refractive element (diverging lens) 15 optically centered on the image forming device 14. In front of the refractive element 15 is placed a relay mirror 16 mounted on a fork 17 placed so as to deviate the luminous rays towards a second refractive element 18 (converging lens) centered on the optical path which, after reflection on the windshield 2, reaches the eyes of the driver.

The refractive element 18 is mounted in a support 19 fixed to the instrument panel 20 of the dashboard of the automobile and cooperates with a net element 21 placed in order to avoid the fall of foreign bodies onto the lens 18, and to improve contrast by reducing specular reflections of sunlight on the surfaces of the lens 18, which could otherwise dazzle the driver under certain conditions.

Preferably the element 21 is removable, to allow cleaning of the front surface of the lens 18.

For preference, the tubular element 11 can be rotated in its seat 12 by means of a lever and handle 22 for adjustment of the position of the virtual image seen by the driver.

In a second form of embodiment, electric motor means can be provided to rotate the element 11 for a more comfortable positioning of the virtual image seen by the driver (for preference, motors of the stepper type will be used as motor means).

In a preferred embodiment, suitable for an automobile Lancia THEMA the parameters of the optical structure are the following:

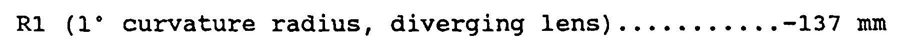

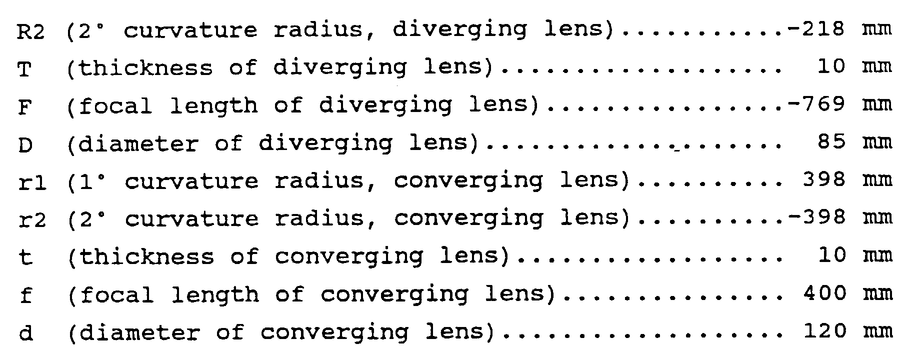

The material used for construction of the lenses is glass of type B2359.

| | |
|---|---|
| Diameter of the flat mirror (flat first-surface reflecting mirror) | 120 mm |
| Dimensions of the display | 25 x 30 mm |
| Distance between display-diverging lens | 170 mm |
| Distance between diverging lens-converging lens | 166 mm |
| Distance between converging lens-image | 1300 mm |

Let us now look at the transformations undergone by the image in passing through the optical system:
p (distance between display-diverging lens) = 170 mm
f (focal length of diverging lens) = -769 mm
q (distance of first virtual image) = -139 mm.

The first lens produces an image which is reduced in size as results from the magnification factor g = 0,8.
p (distance between first virtual image-converging lens) = 306 mm
f (focal length of converging lens) = 400 mm
q (distance of final focal point) = -1300 mm.

The enlargement caused by the second lens is equivalent to g = 4,2, thus as a result the final enlargement is G = 3,4 and the display has a size of 85 x 102 mm at the focal point of 1300 mm from the last lens in the system.

Calculating the distance between the eye of the driver and the windshield to be equivalent to 90 cm, it results that the distance from the eye of the driver to the image becomes 2200 mm.

For a system formed by a diverging lens and a converging lens, arranged in such a way as to produce a virtual image of a given object, the exit pupil of the system (that is to say the opening that limits mostly the view of the image the most) is represented by the converging lens itself.

Therefore in this case the exit pupil subtends to the eye at an angle of 6,8°, whereas the image subtends to the eye at an angle of 2,7°.

Given the much greater size of the former angle with respect to the latter, the image is completely visible with both eyes (without vignetting effects) from at least one position.

Let us now look at the movements which can be made by the driver while continuing to observe the image with both eyes or with one eye only, that is to say let us determine the eye-box of the system.

### Monocular eye-box:

(maximum horizontal and vertical movement allowed the driver while continuing to observe the whole image with at least one eye):
20 cm horizontal movement x 7 cm vertical movement.

### Binocular eye-box:

(maximum horizontal and vertical movement allowed the driver while continuing to observe the whole image with both eyes):
13 cm horizontal movement x 7 cm vertical movement.

The virtual image on the display produced by the optical system, is focussed for preference at 220 cm from the eyes of the driver.

Said distance, which coincides approximately with that existing between the eyes of the driver and the front bumper, is considered the best, as the luminous image is extremely integral with the vehicle and therefore the driver is led to consider it as something forming part of the vehicle itself.

It has, in fact, been found that use of a focal point at a greater distance can cause disorientation of the driver, as he is led to consider that which he can see projected beyond the windshield, but moving with the vehicle, as an extension of the vehicle in which he is travelling, with consequent problems during maneuvers.

Furthermore, in order to avoid constant vision of the image in the front field of vision of the driver, the device is positioned in such a way that the focus point is offset to the side by approximately 4° with respect to the central line of vision.

However, this inclination keeps the luminous display within the peripheral field of vision, and it can thus be seen instantly.

## Claims

1. A head-up display system for presenting visual information to the driver of an automobile provided with said system, the system comprising an automobile windshield (2) and a projection device having
a display unit (14) for generating an image representing said visual information to be presented;
first refractive optical means (15) situated in front of said display unit (14), for directing said image along a first optical axis ;
reflecting means (16) having a nil optical power, located to intercept at an angle of substantially 45° said first optical axis, so as to reflect said image along a second optical axis inclined approximately 90° with respect to said first optical axis; and
second refractive optical means (18) having a positive optical power and located on said second optical axis; wherein
said projection device is mounted with respect to said windshield (2) such that
said first optical axis is substantially parallel to the longest side of said windshield (2), and
said second optical axis is directed towards said windshield (2) in such a manner, that the surface of the windshield (2) works as an element combining the panorama seen by the driver and the virtual image coming from said display unit (14), characterised in that
said first and second refractive optical means (15, 18) are each formed of a single lens element, and
said first refractive optical means (15) has a negative optical power.

2. A system according to claim 1, further comprising a contrast improving element (21) formed of a semi-transparent net located near said second lens element (18) on the side opposite to said reflecting means (16) and mounted in a removable manner in order to allow cleaning of the front surface of said second lens element.

3. A system according to any of the preceding claims, further comprising means for rotating either manually (22) or by means of a motor that the part of the projection device which comprises said display unit (14), said first lens element (15) and said reflecting means (16), so as to enable fine positioning of the image presented to the driver.

4. A system according to any of claims 1 to 3, wherein said display unit (14) comprises a vacuum fluorescent display (VFD).

5. A system according to any of claims 1 to 3, wherein said display unit (14) comprises an array of photoemitting diodes.

6. A system according to any of claims 1 to 3, wherein said display unit (14) comprises an illuminated transparent masks.

7. A system according to any of claims 1 to 3, wherein said display unit (14) comprises a trans-illumination liquid crystal display device.

8. A system according to any of the preceding claims, having the following parameters:
| | | |
|---|---|---|
| a) | Distance between display unit (14) and first lens element (15) | 170 mm; |
| b) | focal length of first lens element (15) | -769 mm; |
| c) | distance between first lens element (15) and second lens element (18) | 166 mm; |
| d) | focal length of second lens element (18) | 400 mm. |

9. A system according to claim 8, wherein the virtual image of said display unit (14) has approximately the dimensions of 85 x 102 mm.

## Patentansprüche

1. Head-up-Anzeigesystem zum Darstellen optischer Informationen für den Fahrer eines Kraftfahrzeugs, das mit dem System versehen ist, wobei das System eine Kraftfahrzeug-Windschutzscheibe (2) und eine Projektionsvorrichtung umfaßt, die aufweist:
eine Anzeigeeinheit (41), die ein Bild erzeugt, das die anzuzeigenden optischen Informationen darstellt;
eine erste brechende optische Einrichtung (15), die vor der Anzeigeeinheit (14) angeordnet ist und das Bild entlang einer ersten optischen Achse leitet;
eine Reflexionseinrichtung (16) mit einer Brechkraft von 0, die so angeordnet ist, daß sie die erste optische Achse in einem Winkel von im wesentlichen 45° schneidet, so daß das Bild entlang einer zweiten optischen Achse reflektiert wird, die in bezug auf die erste optische Achse um ungefähr 90° geneigt ist, und
eine zweite brechende optische Einrichtung (18), die eine positive Brechkraft hat und auf der zweiten optischen Achse angeordnet ist; wobei
die Projektionsvorrichtung in bezug auf die Windschutzscheibe (2) so angebracht ist, daß
die erste optische Achse im wesentlichen parallel zur längsten Seite der Windschutzscheibe (2) ist, und die zweite optische Achse so auf die Windschutzscheibe (2) zu gerichtet ist, daß die Oberfläche der Windschutzscheibe (2) als ein Element wirkt, das das von dem Fahrer gesehene Panorama und das virtuelle Bild kombiniert, das von der Anzeigeeinheit (14) kommt, **dadurch gekennzeichnet, daß**
die erste und die zweite brechende optische Einrichtung (15, 18) jeweils aus einem einzelnen Linsenelement bestehen, und
die erste brechende optische Einrichtung (15) eine negative Brechkraft hat.

2. System nach Anspruch 1, das des weiteren ein konktrastverbesserndes Element (21) umfaßt, das aus einem halbdurchlässigen Raster besteht, das sich in der Nähe des zweiten Linsenelementes (18) an der Seite befindet, die der Reflexionseinrichtung (16) gegenüberliegt, und entfernbar angebracht ist, um Reinigung der Vorderfläche des zweiten Linsenelementes zu ermöglichen.

3. System nach einem der vorangehenden Ansprüche, das des weiteren eine Einrichtung umfaßt, mit der der Teil der Projektionsvorrichtung, der die Anzeigeeinheit (14), das erste Linsenelement (15) und die Reflexionseinrichtung (16) umfaßt, entweder manuell (22) oder mittels eines Motors gedreht wird, so daß Feinausrichtung des für den Fahrer dargestellten Bildes möglich ist.

4. System nach einem der Ansprüche 1 bis 3, wobei die Anzeigeeinheit (14) eine vakuumfluoreszenzanzeige (vacuum fluorescent display - VFD) umfaßt.

5. System nach einem der Ansprüche 1 bis 3, wobei die Anzeigeeinheit (14) eine Anordnung von Photoemissionsdioden umfaßt.

6. System nach einem der Ansprüche 1 bis 3, wobei die Anzeigeeinheit (14) eine beleuchtete transparente Maske umfaßt.

7. System nach einem der Ansprüche 1 bis 3, wobei die Anzeigeeinheit (14) eine Durchleuchtungs-Flüssigkristall-Anzeigevorrichtung umfaßt.

8. System nach einem der vorangehenden Ansprüche, das die folgenden Parameter hat:
| | | |
|---|---|---|
| a) | Abstand zwischen Anzeigeeinheit (14) und erstem Linsenelement (15) | 170 mm; |
| b) | Brennweite des ersten Linsenelementes (15) | -769 mm; |
| c) | Abstand zwischen erstem Linsenelement (15) und zweitem Linsenelement (18) | 166 mm; |
| d) | Brennweite des zweiten Linsenelementes (18) | 400 mm. |

9. System nach Anspruch 8, wobei das virtuelle Bild der Anzeigeeinheit (14) ungefähr die Maße 85 x 102 mm hat.

## Revendications

1. Système de visualisation de pilotage pour présenter une information visuelle au conducteur d'une automobile équipée dudit système, le système comprenant un pare-brise d'automobile (2) et un dispositif de projection comportant :
une unité de visualisation (14) pour générer une image représentant ladite information visuelle devant être présentée ;
des premiers moyens optiques réfringents (15) disposés devant ladite unité de visualisation (14), pour diriger ladite image le long d'un premier axe optique ;
des moyens réfléchissants (16) ayant une puissance optique nulle, disposés de façon à intercepter selon un angle de sensiblement 45° ledit premier axe optique, de façon à réfléchir ladite image le long d'un deuxième axe optique incliné approximativement de 90° par rapport audit premier axe optique ; et
des deuxièmes moyens optiques réfringents (18) ayant une puissance optique positive et disposés sur ledit deuxième axe optique ; dans lequel :
ledit dispositif de projection est monté par rapport audit pare-brise (2) de telle sorte que :
ledit premier axe optique soit sensiblement parallèle au côté le plus long dudit pare-brise (2), et
ledit deuxième axe optique soit dirigé vers ledit pare-brise (2) de telle sorte que la surface du pare-brise (2) joue le rôle d'un élément combinant le panorama vu par le conducteur et l'image virtuelle venant de ladite unité de visualisation (14), caractérisé en ce que :
lesdits premier et deuxième moyens optiques réfringents (15, 18) sont chacun formés d'un élément de lentille unique, et
lesdits premiers moyens optiques réfringents (15) ont une puissance optique négative.

2. Système selon la revendication 1, comprenant de plus un élément d'amélioration du contraste (21) constitué par un filet semi-transparent disposé au voisinage dudit deuxième élément de lentille (18) sur le côté opposé auxdits moyens réfléchissants (16), et monté de façon amovible afin de permettre le nettoyage de la surface avant dudit deuxième élément de lentille.

3. Système selon l'une quelconque des revendications précédentes, comprenant de plus des moyens pour faire tourner, soit manuellement (22), soit au moyen d'un moteur, la partie du dispositif de projection qui comprend ladite unité de visualisation (14), ledit premier élément de lentille (15) et lesdits moyens réfléchissants (16), de façon à permettre un positionnement fin de l'image présentée au conducteur.

4. Système selon l'une quelconque des revendications 1 à 3, dans lequel ladite unité de visualisation (14) comprend un dispositif de visualisation fluorescent sous vide (vacuum fluorescent display ou VFD).

5. Système selon l'une quelconque des revendications 1 à 3, dans lequel ladite unité de visualisation (14) comprend un groupement de diodes photoémettrices.

6. Système selon l'une quelconque des revendications 1 à 3, dans lequel ladite unité de visualisation (14) comprend un masque transparent illuminé.

7. Système selon l'une quelconque des revendications 1 à 3, dans lequel ladite unité de visualisation (14) comprend un dispositif de visualisation à cristaux liquides à transillumination.

8. Système selon l'une quelconque des revendications précédentes, présentant les paramètres suivants :

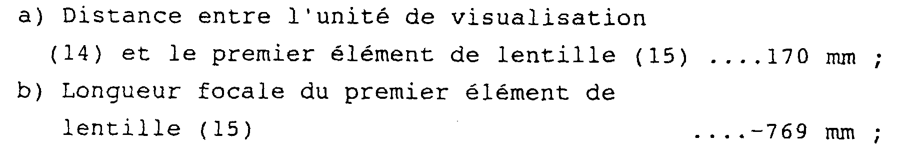

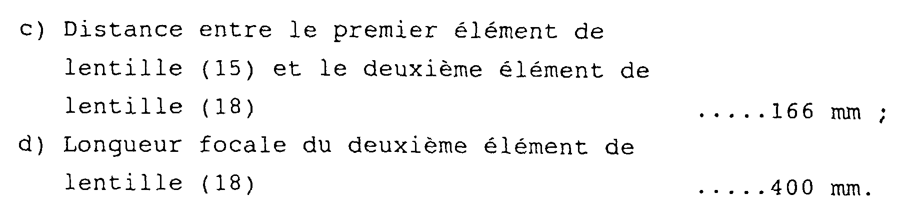

9. Système selon la revendication 8, dans lequel l'image virtuelle de ladite unité de visualisation (14) a approximativement pour dimensions 85 x 102 mm.
